# EUROPÄISCHE PATENTSCHRIFT

(11) **EP 3 514 044 B1**
(45) Veröffentlichungstag und Bekanntmachung des Hinweises auf die Patenterteilung: **15.09.2021**
(21) Anmeldenummer: 18182708.0
(22) Anmeldetag: 10.07.2018
(51) Int. Cl.: B62K 3/00, B62K 5/08, B62K 5/02

(54) **FAHRZEUG**
VEHICLE
VÉHICULE

(30) Priorität: 19.01.2018 EP 18152502
(43) Veröffentlichungstag der Anmeldung: 24.07.2019
(73) Patentinhaber: Bielfeldt, Holm, 21465 Reinbek (DE)
(72) Erfinder: Bielfeldt, Holm, 21465 Reinbek (DE)
(74) Vertreter: Raffay & Fleck

(56) Entgegenhaltungen:
- EP-A1- 2 147 852
- WO-A1-2015/158316
- DE-U1- 20 001 713
- US-A- 6 105 986
- US-A1- 2014 284 898

## Beschreibung

Die vorliegende Erfindung betrifft ein durch Gewichtsverlagerung lenkbares Fahrzeug sowie ein Verfahren zur Lenkung des erfindungsgemäßen Fahrzeugs durch Gewichtsverlagerung.

Im Stand der Technik sind derartige Fahrzeuge für verschiedene Anwendungsfälle bekannt. So ist aus der US 4 941 670 ein System bekannt, durch das mittels Gewichtsverlagerung ein Roller lenkbar ist. Allerdings ist das Fahren auf diesem Roller wenig komfortabel und auch ist es notwendig sich ggf. an dem Handgriff festzuhalten, sodass der Benutzer die Hände nicht unbedingt immer frei hat, um andere Tätigkeiten auszuführen, bspw. einen Drachen, Gleitschirm oder dgl. zu steuern. Auch ist das Lenken bei hohen Geschwindigkeiten nur unzuverlässig bzw. sturzanfällig möglich. Komfortablere Fahrzeuge stellen hierbei Liegefahrräder dar, die einen tief liegenden Sitz mit Rückenlehne und vorne angebrachten Pedalen aufweisen. Allerdings werden diese Liegeräder über einen Lenker gelenkt, der mit den Händen zu betätigen ist. Somit hat der Benutzer auch hier die Hände nicht frei. Das Dokument EP 2 147 852 A1 zeigt ein solches Fahrzeug, nämlich ein Liegerad, mit zwei Hinterrädern nach Anspruch 1 und entsprechendem Lenkverfahren nach Anspruch 13, jedoch mit einem anderen Abstand zwischen den Hinterrädern und der Lenkachse und ohne ein Rückstellselement, das einen Geradeauslauf wiederherstellt, wie es in den Ansprüchen 1 und 13 definiert ist.

Der Erfindung liegt daher die Aufgabe zugrunde ein Fahrzeug der bekannten Art derart anzupassen, dass es eine angenehme Sitzposition während der Fahrt ermöglicht, der Benutzer aber durchgängig auch die Hände frei hat, um weitere Tätigkeiten ausführen zu können oder auch ein Benutzer ohne Hände das Fahrzeug lenken kann und auch dass ein Lenken durch Gewichtsverlagerung bei höheren Geschwindigkeiten, zum Beispiel bei mehr als 20km/h sicher möglich ist.

Weiter soll ein möglichst kleiner Wendekreis sowie ein möglichst kurzer Radstand realisiert werden. Darüber hinaus soll die Spurbreite so klein wie möglich gehalten werden, insbesondere kleiner als 80cm, insbesondere kleiner als 72cm. Sowohl der möglichst kleine Wendekreis als auch die möglichst geringe Spurbreite des Liegerades führen zur besseren Manövrierfähigkeit auf schmalen Wegen und in dichtem Verkehr z.B. innerhalb der Stadt. Ebenfalls soll es möglich sein, die mögliche Kurvengeschwindigkeit gegenüber herkömmlichen dreirädrigen Liegerädern zu erhöhen.

Die kleinere Spurbreite sowie die höhere Kurvengeschwindigkeit können dadurch erzielt werden, dass das dreirädrige Liegerad über Gewichtsverlagerung gesteuert wird bzw. dazu eingerichtet ist und zwar derart, dass der Schwerpunkt des Fahrers bei Kurvenfahrten zur kurveninneren Seite wandert und tiefer liegt als bei Geradeausfahrten. Damit wird die Gefahr des Umkippens bei Kurvenfahrten im Vergleich zu herkömmlichen Liegerädern deutlich verringert, was im Umkehrschluss dazu führt, dass die Spurbreite kleiner und/oder die mögliche Kurvengeschwindigkeit höher wird.

Die Steuerung eines dreirädrigen Liegerades über Gewichtsverlagerung wird bislang über Knicklenkungen erzielt. Dabei gibt es diverse Versionen der Knicklenkung. Alle weisen einen Abstand zwischen dem Drehpunkt der Achse, insbesondere Hinterachse, und der Schwenkachse (Pivot Achse) auf, der größer ist als der Radius des Hinterrades, wodurch sich ein relativer langer Radstand und damit ein größerer Wendekreis ergibt.

Erfindungsgemäß ist die Lage der Lenkachse, auch Schwenkachse (auch Pivot Achse) zum Drehpunkt der Achse, insbesondere Hinterachse, derart gewählt, dass der Abstand der Schwenkachse (Pivot Achse) zum Drehpunkt der Achse, insbesondere Hinterachse, kleiner als der Radius jedes der Hinterräder oder gleich null ist, somit kann die Achse, insbesondere Hinterachse, nah oder direkt um die Lenkachse/Schwenkachse (Pivot Achse) drehen und nicht wie bei einer "Knicklenkung" über einen zusätzlichen großen Hebelarm, der zwischen Schwenkachse und dem Drehpunkt der Achse, insbesondere Hinterachse, liegt.

D.h. bei der hier vorliegenden Lenkung über Gewichtsverlagerung handelt sich damit nicht um keine "Knicklenkung", da nur ein geringer oder kein Abstand mehr zwischen der Drehachse der Hinterräder und der Lenkachse/Schwenkachse vorhanden ist.

Die Aufgabe wird gelöst durch ein Fahrzeug mit den Merkmalen des Anspruchs 1. Vorteilhafte Weiterbildungen eines solchen in den abhängigen Ansprüchen 2 bis 12 bezeichnet. Gelöst wird die Aufgabe auch durch ein Verfahren zum Lenken eines Fahrzeugs durch Gewichtsverlagerung mit den Merkmalen des Anspruchs 13. Eine vorteilhafte Weiterbildung dieses Verfahrens ist in dem abhängigen Anspruch 14 bezeichnet.

Bei einem Fahrzeug umfassend mindestens zwei Reibungsverminderungsmittel, die an einer gemeinsamen Achse, insbesondere Hinterachse, und/oder gemeinsamen steifen Querstruktur befestigt sind und/oder steif miteinander verbunden sind, eine tragende Struktur, die über eine Lenkachse mit der Achse, insbesondere Hinterachse, und/oder gemeinsamen steifen Querstruktur und/oder den mindestens zwei Reibungsverminderungsmitteln schwenkbar verbunden ist und die durch Gewichtsverlagerung in eine Schrägstellung bringbar ist, und mindestens ein Rückstellelement, besteht der erfindungsgemäße Ansatz darin, dass die Lenkachse eine Neigung von 20° bis 80°, insbesondere von 40° bis 70° gegen die Horizontale aufweist, und dass das mindestens eine Rückstellelement so angeordnet ist, dass das Rückstellelement eine rückstellende Kraft auf eine Auslenkung der Achse, insbesondere Hinterachse, und/oder gemeinsamen steifen Querstruktur und/oder der Reibungsverminderungsmittel ausübt und die rückstellende Kraft in einer Ebene senkrecht zu der Lenkachse oder mit einem Winkel von kleiner als 30°, insbesondere kleiner als 20°, zu der Ebene senkrecht zur Lenkachse verläuft und/oder das Rückstellelement mit seiner Längserstreckung in einer Ebene senkrecht zur Lenkachse oder mit einem Winkel von kleiner 30°, insbesondere kleiner 20°, zu der Ebene senkrecht zur Lenkachse verläuft.

Dabei wird der Winkel der Neigung insbesondere ausgehend von der Lenkachse in seitlicher Ansicht auf das Fahrzeug mit Vorwärtsfahrrichtung nach links im Uhrzeigersinn bis zur Horizontalen gemessen. Die Vorwärtsfahrrichtung ist insbesondere die Richtung von der Lenkachse in Richtung eines weiteren Reibungsverminderungsmittels, bei mehreren weiteren Reibungsverminderungsmitteln in Richtung deren Mittelpunkt. Der Winkel der Neigung der Lenkachse kann insbesondere auch ausgehend von der Lenkachse in seitlicher Ansicht auf das Fahrzeug in Richtung von einem weiteren Reibungsverminderungsmittel weg bis zur Horizontalen gemessen werden.

Auf und/oder an der tragenden Struktur ist insbesondere eine Aufnahme für ein Lebewesen vorgesehen, insbesondere eine Sitzfläche und/oder ein Sitz mit Rückenlehne.

D.h. die Verbindung von tragender Struktur mit der Achse, insbesondere Hinterachse, und/oder gemeinsamen steifen Querstruktur und/oder den mindestens zwei Reibungsverminderungsmitteln durch eine Lenkachse erlaubt eine Lenkung der Achse, insbesondere Hinterachse, und/oder gemeinsamen steifen Querstruktur und/oder der mindestens zwei Reibungsverminderungsmittel dadurch, dass die tragende Struktur aus einer, insbesondere waagerechten, Ruhelage heraus in eine Schrägstellung bringbar ist infolge einer Gewichtsverlagerung des auf der tragenden Struktur befindlichen Benutzers. Wenn also beispielsweise der auf der tragenden Struktur befindliche Benutzer die Fahrtrichtung des erfindungsgemäßen Fahrzeuges nach rechts verändern will, braucht er lediglich sein Gewicht auf die rechte Seite der tragenden Struktur zu verlagern, um diese aus der waagerechten Ruhelage heraus in eine Schrägstellung zu bringen. Diese Schrägstellung der tragenden Struktur bedingt durch die erfindungsgemäße Lenkachse eine Verschwenkung gegenüber der Achse, insbesondere Hinterachse, und/oder gemeinsamen steifen Querstruktur und/oder der mindestens zwei Reibungsverminderungsmittel in der Weise, dass diese aus ihrer die Geradeaus-Fahrtrichtung festlegenden Position ausgelenkt wird/werden, mit der Folge, dass sich die Fahrtrichtung in eine Rechtskurve verändert. Dies lässt sich durch Austausch von rechts gegen links auf den Fall einer Linkskurve übertragen.

Erfindungsgemäß ist der Abstand der Lenkachse/Schwenkachse (Pivot Achse) zur Drehachse der zwei Räder, auch der Hinterräder, und/oder zur Achse, insbesondere Hinterachse, kleiner als der Radius jedes der zwei Räder, insbesondere kleiner als 50% des Radius des kleinsten der zwei Räder und/oder kleiner als 30cm. In einer besonderen Ausgestaltung schneiden sich Lenkachse/Schwenkachse (Pivot Achse) und Drehachse der zwei Räder, auch der Hinterräder, und/oder die Achse, insbesondere Hinterachse, nicht.

Da bei dem erfindungsgemäßen Fahrzeug die gewünschte Änderung der Fahrtrichtung, also die Lenkung durch eine einfache Gewichtsverlagerung des Benutzers auf der tragenden Struktur bewerkstelligt werden kann, hat der Benutzer durchgängig die Hände frei, um weitere Tätigkeiten ausführen zu können.

Ein Fahrzeug umfasst hierbei insbesondere ein Liegerad, das per Muskelkraft und/oder Elektromotor angetrieben oder unterstützt wird, einen Kite-Buggy, welches ein von einem Drachen ziehbares antriebsloses Fahrzeug darstellt, einen Gleitschirmflieger aufweisend einen Propeller und/oder Strandsegler aufweisend einen Mast.

Eine gemeinsame steife Querstruktur kann eine oder mehrere Achse, insbesondere Hinterachsen, aufnehmen oder mit Ihnen steif aber um die Achse, insbesondere Hinterachse, rotierbar verbunden sein. Sie kann insbesondere Lager zur Lagerung mindestens einer Achse, insbesondere Hinterachse, aufweisen. Die Achse, insbesondere Hinterachse, oder gemeinsame steife Querstruktur kann aber auch derart ausgebildet sein, dass sich Hinterräder um sie drehen.

Eine tragende Struktur beinhaltet insbesondere einen Sitz, insbesondere einen steifen Sitz, insbesondere mit Sitzfläche und/oder Rückenlehne, ein Dreieckssitztuch mit Haltestruktur für das Sitztuch oder ein Sitztuch mit Haltestruktur für das Sitztuch, insbesondere mit Sitzplatte und/oder Rückenplatte.

Eine Gewichtsverlagerung bedeutet die Gewichtsverlagerung eines auf der tragenden Struktur befindlichen Benutzers hin zu der rechten oder linken Seite des Fahrzeugs.

Schrägstellung bedeutet, dass die tragende Struktur aus einer, insbesondere im wesentlichen waagerechten, Ruhestellung in eine davon abweichende Stellung gebracht wird, dabei ist die tragende Struktur in der Schrägstellung insbesondere um einen Winkel von größer 0° bis 60°, insbesondere 0 bis 45°, von der horizontalen Ruhestellung verdreht, insbesondere lässt das Fahrzeug eine Schrägstellung um mindestens 45° insbesondere mindestens 60° zu.

Das mindestens eine erfindungsgemäße Rückstellelement umfasst mindestens eine Feder. Das Fahrzeug kann auch ein Dämpfungselement oder ein Dämpfungs- und Rückstellelement umfassen und/oder mindestens einen Schwingungsdämpfer aufweisen.

Ein Rückstellelement ist insbesondere nicht mit einem Schwingungsdämpfer oder Dämpfer gleichzusetzen. Ein Rückstellelement kann einen Schwingungsdämpfer beinhalten, übt aber im Gegensatz zu einem Schwingungsdämpfer ein rückstellendes Moment und/oder eine rückstellende Kraft auf, insbesondere ist das mindestens eine Rückstellelement so ausgebildet und/oder angeordnet, dass es eine Rückstellung in die Konfiguration und/oder Rotations- und/oder Schwenkstellung um die Lenkachse bewirkt und/oder fördert, bei der das Fahrzeug geradeaus fährt.

Die durch das erfindungsgemäße Rückstellelement ausgeübte rückstellende Kraft bewirkt, dass be einer Lageänderung der tragenden Struktur ein gewisser Widerstand entgegengesetzt wird und so eine ungewollte Fahrtrichtungsänderung vermieden werden kann und, dass eine Rückstellkraft in Richtung Ruhelage aufgebracht wird, die ein Zurückkehren in die Ruhelage erleichtert. Die Ruhelage ist insbesondere dadurch gekennzeichnet, dass das Fahrzeug in der Ruhelage geradeaus fährt und/oder das mindestens eine Rückstellelement ohne Einwirkung anderer Kräfte das Fahrzeug in die Ruhelage bringt und/oder in dieser hält.

In einer vorteilhaften Variante kann die Lenkachse, insbesondere über ein Verbindungselement, mit der Achse, insbesondere Hinterachse, und/oder gemeinsamen steifen Querstruktur und/oder den mindestens zwei Reibungsverminderungsmitteln verbunden sein. Dabei kann insbesondere die Lenkachse und steif mit der Achse, insbesondere Hinterachse, oder der gemeinsamen steifen Querstruktur verbunden sein und eine Lagerung dieser Lenkachse wiederum mit der tragenden Struktur steif verbunden sein.

Bei einer alternativen bevorzugten Ausführungsform kann die Achse, insbesondere Hinterachse, oder die gemeinsame steife Querstruktur eine Lagerung der Lenkachse beinhalten oder mit dieser Lagerung fest verbunden sein, während die Lenkachse, insbesondere über ein Verbindungselement, Lagerung gelagerte Achse mit der tragenden Struktur verbunden ist.

Auch kann das Fahrzeug weiter mindestens ein weiteres Reibungsverminderungsmittel und/oder eine Vorderachse umfassen, wobei das weitere Reibungsverminderungsmittel und/oder die Vorderachse steif mit der tragenden Struktur verbunden ist und/oder bei einer Auslenkung der Achse, insbesondere Hinterachse, und/oder gemeinsamen steifen Querstruktur und/oder der mindestens zwei Reibungsverminderungsmitteln ausschwenkt.

Des Weiteren ist die Sitzfläche und/oder die tragende Struktur zumindest teilweise unterhalb einer Verbindungsebene zwischen einem obersten Punkt des weiteren Reibungsverminderungsmittel und der Achse, insbesondere Hinterachse, und/oder gemeinsamen steifen Querstruktur und/oder dem obersten Punkte der mindestens zwei Reibungsverminderungsmittel angeordnet und/oder ist die Sitzfläche zumindest teilweise unterhalb einer Verbindungsebene zwischen einer Rotationsachse des weiteren Reibungsverminderungsmittels und der Achse, insbesondere Hinterachse, und/oder gemeinsamen steifen Querstruktur und/oder der Achse, insbesondere Hinterachse, der mindestens zwei Reibungsverminderungsmittel angeordnet.

In einer weiteren vorteilhaften Variante kann das mindestens eine Dämpfungs- und/oder Rückstellelement zwischen der tragenden Struktur und der Achse, insbesondere Hinterachse, und/oder gemeinsamen steifen Querstruktur und/oder den mindestens zwei Reibungsverminderungsmitteln angeordnet sein. D.h. das mindestens eine Dämpfungs- und/oder Rückstellelement ist mit einem Ende an der tragenden Struktur befestigt und mit einem anderen Ende an der Achse, insbesondere Hinterachse, und/oder gemeinsamen steifen Querstruktur und/oder den mindestens zwei Reibungsverminderungsmitteln.

Auch verläuft die Längserstreckung des mindestens einen Dämpfungs- und/oder Rückstellelements und/oder die dämpfende und/oder rückstellende Kraft senkrecht oder in einem Winkel von 90° bis 45°, insbesondere von 90° bis 60°, insbesondere von 90° bis 70° zu mindestens einer Achse, insbesondere Hinterachse, und/oder gemeinsamen steifen Querstruktur, insbesondere in Ruhelage gemessen.

Weiter kann das Fahrzeug mindestens zwei Dämpfungs- und/oder Rückstell-elemente umfassen, wobei mindestens je eins der mindestens zwei Dämpfungs- und/oder Rückstellelemente zu beiden Seiten der Lenkachse mit der tragenden Struktur verbunden ist. Insbesondere ist die Lenkachse mittig an der Querstruktur oder Achse, insbesondere Hinterachse, befestigt, betrachtet über die Breite der Querstruktur quer zur Geradeaus-Fahrtrichtung des Fahrzeuges. Insbesondere ist ein Dämpfungs- und/oder Rückstellelement mit einem Ende auf einer ersten Seite von der Lenkachse an der Querstruktur befestigt und ein zweites Dämpfungs- und/oder Rückstellelement mit einem Ende auf einer der ersten Seite relativ zur Lenkachse gegenüberliegenden Seite an der gemeinsamen Querstruktur befestigt. Insbesondere schließt jedes Dämpfungs- und/oder Rückstellelement und die Querstruktur auf der Seite zur Lenkachse hin jeweils in der Aufsicht von oben einen Winkel von 45° bis 90° ein.

In einer weiteren vorteilhaften Variante kann die Achse, insbesondere Hinterachse, und/oder gemeinsame steife Querstruktur und/oder die mindestens zwei Reibungsverminderungsmittel nur über die Lenkachse und das mindestens eine Dämpfungs- und/oder Rückstellelement mit der tragenden Struktur gekoppelt sein oder die Achse, insbesondere Hinterachse, und/oder gemeinsame steife Querstruktur mit keiner weiteren Lenkvorrichtung verbunden sein. D.h. das Fahrzeug weist nur eine Lenkvorrichtung, nämlich die Lenkachse auf. Das Fahrzeug wird somit lediglich über die Lenkachse gesteuert. Mit besonderem Vorteil ist die Achse, insbesondere Hinterachse, und/oder die gemeinsame steife Querstruktur allein über die Dämpfungs- und/oder Rückstellelemente und/oder die Lenkachse mit der der tragenden Struktur verbunden und/oder gekoppelt. Mit besonderem Vorteil ist die Achse, insbesondere Hinterachse, und/oder die gemeinsame steife Querstruktur nicht mit einem Lenkseil und/oder nicht mit einer Lenkkette und/oder nicht mit einem Lenkmittel gekoppelt und/oder verbunden.

Mit besonderem Vorteil ist die Achse, insbesondere Hinterachse, und/oder gemeinsame steife Querstruktur und/oder sind die mindestens zwei Reibungsverminderungsmittel gegenüber der tragenden Struktur um die Lenkachse schwenkbar. Insbesondere besteht zwischen der tragenden Struktur und der Achse, insbesondere Hinterachse, und/oder gemeinsamen steifen Querstruktur Bewegungsfreiheit ausschließlich durch Schwenken und/oder Drehen um die Lenkachse und/oder zwischen der tragenden Struktur und den mindestens zwei Reibungsverminderungsmitteln Bewegungsfreiheit ausschließlich durch Schwenken und/oder Drehen um die Lenkachse und Drehen der Reibungsverminderungsmittel um ihre Rotationsachsen.

Mit besonderem Vorteil ist die tragende Struktur und/oder die Sitzfläche steif mit der Lenkachse und/oder abgesehen von der Bewegungsfreiheit durch die Schwenkbarkeit und/oder Drehbarkeit um die Lenkachse steif mit der Achse, insbesondere Hinterachse, und/oder der gemeinsamen steifen Querstruktur verbunden.

Die Reibungsverminderungsmittel können ausgebildet sein als Räder, Skier und/oder Kufen. Dabei können insbesondere zumindest die mindestens zwei Reibungsverminderungsmittel gleich ausgebildet sein und/oder alle Reibungsverminderungsmittel gleich ausgebildet sein.

Des Weiteren kann das Fahrzeug über mindestens ein Pedal und/oder einen Elektromotor angetrieben werden, wobei das mindestens eine Pedal und/oder der Elektromotor insbesondere das mindestens eine weitere Rad und/oder die mindestens zwei weiteren Räder antreibt. Über das mindestens eine Pedal wirkt die mit den Beinen ausgeübte Antriebskraft des Benutzers, der die an den rotierenden Pedalen befestigten Tretkurbeln wechselweise nach unten und/oder vorne drückt. Das Fahrzeug wird dabei insbesondere von einem mitrotierenden Kettenblatt über eine Kette angetrieben.

Auch kann die Sitzfläche und/oder die tragende Struktur zumindest teilweise unterhalb einer Ebene angeordnet sein, die tangential zu dem obersten Punkt der mindestens zwei Räder verläuft, wenn die Reibungsverminderungsmittel als Räder ausgebildet sind.

In einem weiteren Aspekt der Erfindung wird ein Verfahren zum Lenken eines Fahrzeugs durch Gewichtsverlagerung offenbart, wobei das Fahrzeug
- mindestens zwei Reibungsverminderungsmittel umfasst, die an einer gemeinsamen Achse, insbesondere Hinterachse, und/oder gemeinsamen steifen Querstruktur befestigt sind und/oder steif miteinander verbunden sind und eine tragende Struktur umfasst, die über eine Lenkachse mit der Achse, insbesondere Hinterachse, und/oder gemeinsamen steifen Querstruktur und/oder den mindestens zwei Reibungsverminderungsmitteln schwenkbar verbunden ist und die durch Gewichtsverlagerung aus einer Ruhelage in eine Schrägstellung bringbar ist, und
- mindestens ein Rückstellelement umfasst, wobei die Lenkachse eine Neigung von 20° bis 80°, insbesondere von 40° bis 70°, gegen die Horizontale aufweist, und wobei das mindestens eine Rückstellelement so angeordnet ist, dass das Rückstellelement eine rückstellende Kraft auf eine schwenkende Auslenkung der Achse, insbesondere Hinterachse, und/oder gemeinsamen steifen Querstruktur und/oder der Reibungsverminderungsmittel um die Lenkachse ausübt und die rückstellende Kraft in einer Ebene senkrecht zur Lenkachse oder mit einem Winkel von kleiner 30°, insbesondere kleiner 20°, zu der Ebene senkrecht zur Lenkachse verläuft und/oder das Rückstellelement mit seiner Längserstreckung in einer Ebene senkrecht zur Lenkachse oder mit einem Winkel von kleiner 30° insbesondere kleiner 20°, zu der Ebene senkrecht zur Lenkachse verläuft, und bei dem Fahrzeug durch die Gewichtsverlagerung das schwenkende Auslenken der Achse, insbesondere Hinterachse, und/oder gemeinsamen steifen Querstruktur und/oder der Reibungsverminderungsmittel um die Lenkachse bewirkt wird.

Dabei kann die Gewichtsverlagerung eine Gewichtsverlagerung eines auf der tragenden Struktur befindlichen Lebewesens sein.

Mit besonderem Vorteil wird durch die Gewichtsverlagerung eine relative Bewegung zwischen tragender Struktur und Achse, insbesondere Hinterachse, und/oder gemeinsamer steifer Querstruktur ausschließlich als und/oder durch Drehen und/oder Schwenken um die Lenkachse bewirkt und/oder eine relative Bewegung zwischen tragender Struktur und den mindestens zwei Reibungsverminderungsmitteln ausschließlich als und/oder durch Drehen und/oder Schwenken um die Lenkachse und Drehen der Reibungsverminderungsmittel um ihre Rotationsachsen bewirkt.

Mit besonderem Vorteil wird auf der tragenden Struktur ein Lebewesen angeordnet, insbesondere auf einer Sitzfläche und/oder einem eine Sitzfläche aufweisendem Sitz. Mit besonderem Vorteil wird ein Lenken des Fahrzeugs ausschließlich durch Gewichtsverlagerung bewirkt, insbesondere durch Gewichtsverlagerung des Gewichts des auf der tragenden Struktur angeordnet Lebewesens. Dabei wird insbesondere nicht die Anordnung des Lebewesens vollständig verändert, sondern wird insbesondere die Gewichtsverlagerung unter Beibehaltung der Position einzelner Abschnitte des Lebewesens vorgenommen. Insbesondere wird die Gewichtsverlagerung als eine laterale Gewichtsverlagerung bezogen auf das Lebewesen und/oder das Fahrzeug durchgeführt, insbesondere zumindest durch Verlagerung eines Oberkörpers des Lebewesens insbesondere unter Beibehaltung der Position eines Gesäßes des Lebewesens.

Mit besonderem Vorteil wird keine Betätigung eines Lenkers vorgenommen. Insbesondere wird eine Lenkung des Fahrzeuges nicht unter Verwendung der Extremitäten des Lebewesens, abgesehen zur Gewichtsverlagerung des Lebewesens, vorgenommen. Insbesondere werden die Extremitäten des Lebewesens nicht zur Betätigung eines Lenkers oder eines Fußsteuers verwendet.

Mit besonderem Vorteil wird das Lebewesen so auf dem Fahrzeug und/oder der tragenden Struktur angeordnet, dass ihr Massenschwerpunkt und/oder ihr Gesäß unterhalb einer Verbindungsebene zwischen einem obersten Punkt des weiteren Reibungsverminderungsmittel und der Achse, insbesondere Hinterachse, und/oder gemeinsamen steifen Querstruktur und/oder dem obersten Punkte der mindestens zwei Reibungsverminderungsmittel und/oder unterhalb einer Verbindungsebene zwischen einer Rotationsachse des weiteren Reibungsverminderungsmittels und der Achse, insbesondere Hinterachse, und/oder gemeinsamen steifen Querstruktur und/oder der Achse, insbesondere Hinterachse, der mindestens zwei Reibungsverminderungsmittel angeordnet ist.

Die in Bezug auf das Fahrzeug beschriebenen vorteilhaften Ausbildungen lassen sich auf das Verfahren und/oder das für die Durchführung verwendete Verfahren entsprechend übertragen. Insbesondere wird das Verfahren unter Verwendung eines erfindungsgemäßen Fahrzeugs durchgeführt.

Weitere Vorteile und Merkmale der Erfindung ergeben sich aus der nachstehenden Beschreibung verschiedener Ausführungsbeispiele anhand der beigefügten Figuren. Dabei zeigen:
- Figur 1: eine Seitenansicht des erfindungsgemäßen Fahrzeugs in einer Ausführungsvariante als Kite-Buggy;
- Figur 2: eine Draufsicht (in Richtung A) des erfindungsgemäßen Fahrzeugs in der Ausführungsvariante als Kite-Buggy.
- Figur 3: eine Ansicht (in Richtung B) des erfindungsgemäßen Fahrzeugs in der Ausführungsvariante als Kite-Buggy
- Figur 4: eine Seitenansicht des erfindungsgemäßen Fahrzeugs in einer Ausführungsvariante als Liegerad
- Figur 5: eine Draufsicht (in Richtung A) des erfindungsgemäßen Fahrzeugs in der Ausführungsvariante als Liegerad
- Figur 6: eine Ansicht (in Richtung B) des erfindungsgemäßen Fahrzeugs in der Ausführungsvariante als Liegerad
- Figur 7: eine Seitenansicht des erfindungsgemäßen Fahrzeugs in einer weiteren Ausführungsvariante als Liegerad
- Figur 8: eine Draufsicht (in Richtung A) des erfindungsgemäßen Fahrzeugs in der weiteren Ausführungsvariante als Liegerad
- Figur 9: eine Ansicht (in Richtung B) des erfindungsgemäßen Fahrzeugs in der weiteren Ausführungsvariante als Liegerad
- Figur 10: eine Seitenansicht des erfindungsgemäßen Fahrzeugs in der Ausführungsvariante als Liegerad mit Elektromotor
- Figur 11: eine Draufsicht (in Richtung A) des erfindungsgemäßen Fahrzeugs in der Ausführungsvariante als Liegerad mit Elektromotor
- Figur 12: eine Ansicht (in Richtung B) des erfindungsgemäßen Fahrzeugs in der Ausführungsvariante als Liegerad mit Elektromotor

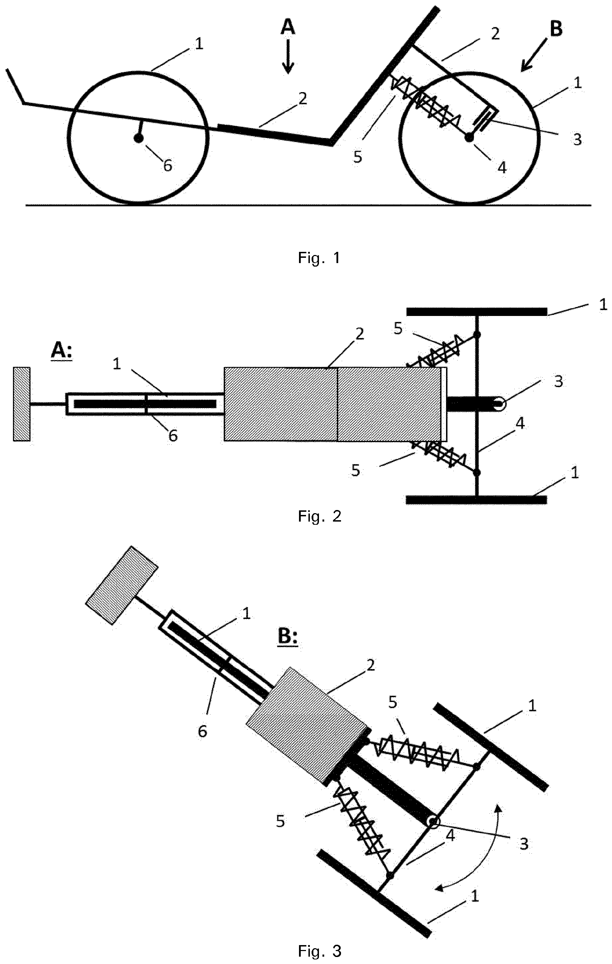

Figur 1 bis 3 zeigen das erfindungsgemäße Fahrzeug in einer ersten Ausführungsvariante als Kite-Buggy, d.h. das Fahrzeug kann von einem Drachen (nicht dargestellt), gezogen werden. Es sind die wesentlichen Bauteile dargestellt: drei Reibungsverminderungsmittel 1, die als Räder ausgeführt sind, eine tragende Struktur 2, die einen Sitz mit Rückenlehne aufweist, eine Lenkachse 3 und eine steife Querstruktur 4, die zwei hintere Räder verbindet, zwei Dämpfungs- und Rückstellelemente 5, die als Feder- und Dämpfungselement ausgeführt sind, und eine Vorderachse 6, um die das vordere Rad 1 dreht und mit der die tragende Struktur 2 steif verbunden ist. Die Lenkachse 3 verbindet die Querstruktur 4 mit der tragenden Struktur 2 und lässt eine Rotation der Querstruktur 4 relativ zur tragenden Struktur 2 um die Lenkachse 3 zu. Die Feder- und Dämpfungselemente 5 sind jeweils seitlich, rechts und links, an der tragenden Struktur 2 und der Querstruktur 4 angeordnet. Die Lenkachse 3 weist in der Darstellung eine Neigung von 50° gegen die Horizontale auf.

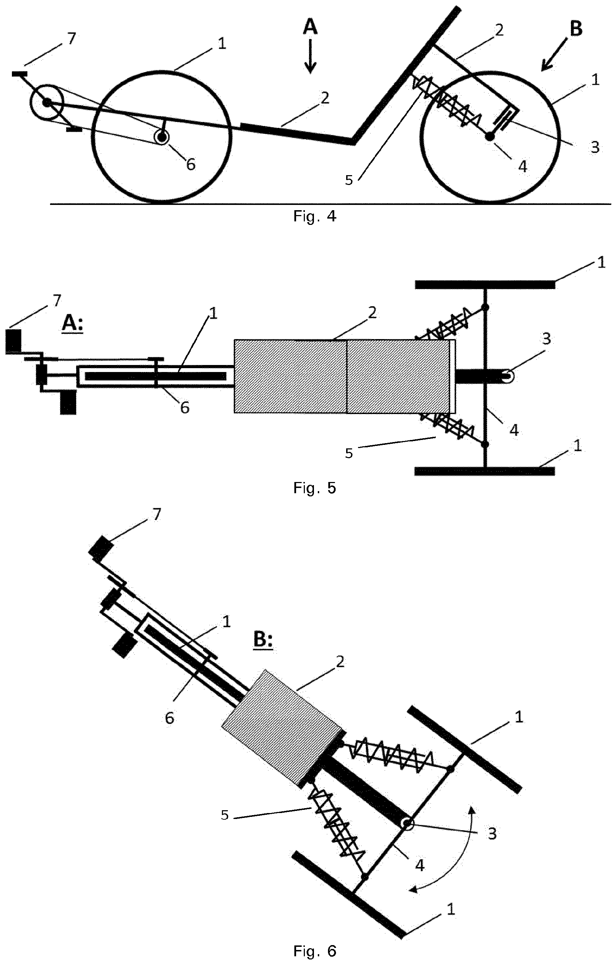

Figur 4 bis 6 zeigen das erfindungsgemäße Fahrzeug aufbauend auf der vorherigen Ausführung in einer zweiten Ausführungsvariante als Liegerad, d.h. das Fahrzeug wird mit Muskelkraft durch das Treten von Pedalen angetrieben, wobei ein Tretlager und Pedale 7 vorne an der tragenden Struktur 2 zum Antrieb des vorderen Rades 1 angebracht sind.

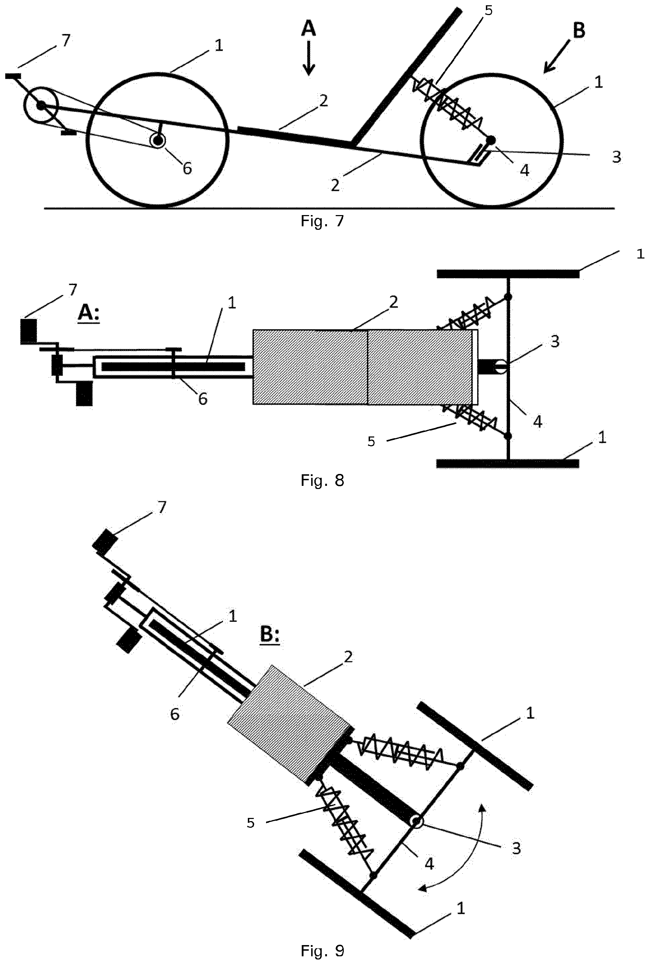

Figur 7 bis 9 zeigen das erfindungsgemäße Fahrzeug ausgehend von der zweiten Ausführungsvariante in einer dritten Ausführungsvariante als Liegerad.

In dieser Ausführungsvariante ist die Lenkachse 3 unterhalb der Querstruktur 4 an dieser angeordnet und verbindet diese mit der tragenden Struktur 2. Die Feder- und Dämpfungselemente 5 sind jeweils seitlich, rechts und links, an der tragenden Struktur 2 und der Querstruktur 4 befestigt.

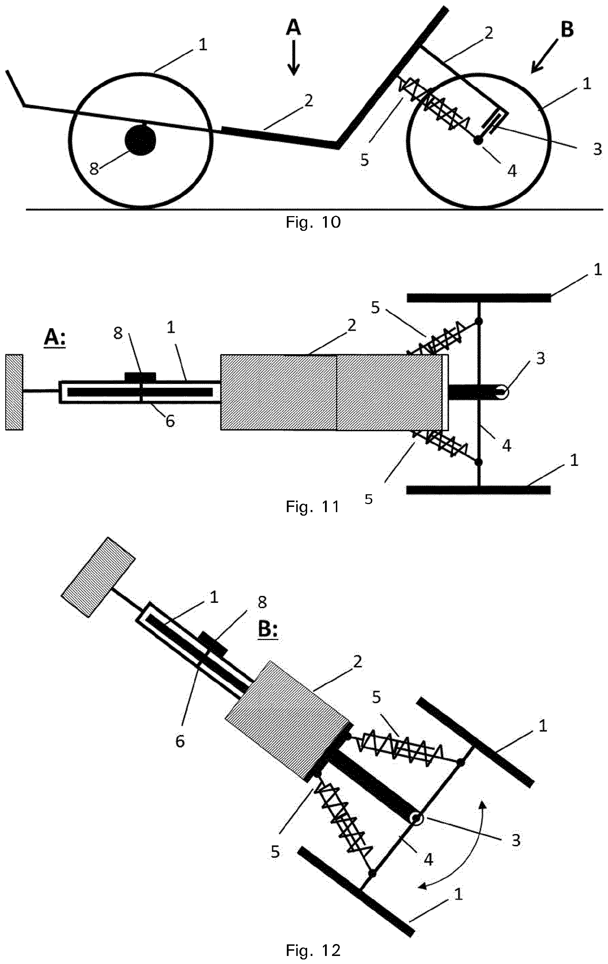

Figur 10 bis 12 zeigen das erfindungsgemäße Fahrzeug in einer vierten Ausführungsvariante ausgehend von der ersten Ausführungsvariante als Liegerad mit Elektromotor, der das vordere Rad 1 antreibt. Die Anordnung der Lenkachse entspricht der der ersten Ausführungsvariante.

### Bezugszeichen

- 1: Reibungsverminderungsmittel
- 2: tragende Struktur
- 3: Lenkachse
- 4: gemeinsame steife Querstruktur
- 5: Dämpfungs- und/oder Rückstellelement
- 6: Vorderachse
- 7: Pedal
- 8: Elektromotor

## Patentansprüche

1. Fahrzeug, nämlich Liegerad oder Kite-Buggy, umfassend mindestens zwei Räder (1), die an mindestens einer Hinterachse, und zwar entweder einer gemeinsamen Hinterachse oder an einer oder mehreren Hinterachsen einer gemeinsamen steifen Querstruktur (4), befestigt sind, eine tragende Struktur (2), die über eine Lenkachse (3) mit der mindestens einen Hinterachse (4) und den mindestens zwei Rädern (1) schwenkbar verbunden ist und die durch Gewichtsverlagerung in eine Schrägstellung bringbar ist, und mindestens ein Rückstellelement (5), wobei die Lenkachse (3) eine Neigung von 20° bis 80° gegen die Horizontale aufweist, wobei der Winkel der Neigung ausgehend von der Lenkachse in seitlicher Ansicht auf das Fahrzeug mit Vorwärtsfahrrichtung nach links im Uhrzeigersinn bis zur Horizontalen gemessen ist, und wobei das mindestens eine Rückstellelement (5) so angeordnet ist, dass das Rückstellelement (5) eine rückstellende Kraft auf eine Auslenkung der mindestens einen Hinterachse und der Räder (1) ausübt und die rückstellende Kraft und/oder das Rückstellelement (5) mit seiner Längserstreckung in einer Ebene senkrecht zur Lenkachse (3) oder mit einem Winkel von kleiner als 30° zu der Ebene senkrecht zur Lenkachse (3) verläuft, wobei das Fahrzeug mindestens ein weiteres Rad (1) aufweist, wobei das weitere Rad (1) steif mit der tragenden Struktur (2) verbunden ist und bei einer Auslenkung der mindestens einen Hinterachse ausschwenkt, wobei eine Sitzfläche zumindest teilweise unterhalb einer Verbindungsebene zwischen einem ersten obersten Punkt des weiteren Rads und einem zweiten obersten Punkt der mindestens zwei Räder angeordnet ist und wobei die mindestens eine Hinterachse mit keiner weiteren Lenkvorrichtung verbunden ist, wobei der Abstand der Lenkachse zur Drehachse der zwei Räder kleiner als der Radius jedes der zwei Räder und/oder kleiner als 30cm ist und wobei das mindestens eine Rückstellelement (5) mindestens eine Feder umfasst und wobei das mindestens eine Rückstellelement (5) so eingerichtet ist, dass es ohne Einwirkung anderer Kräfte das Fahrzeug in die Ruhelage zurück bringt, wobei die Ruhelage **dadurch gekennzeichnet ist, dass** das Fahrzeug in der Ruhelage geradeaus fährt.

2. Fahrzeug nach Anspruch 1, **dadurch gekennzeichnet, dass** es mindestens ein Dämpfungselement aufweist, wobei das mindestens eine Dämpfungselement so angeordnet ist, dass das Dämpfungselement eine dämpfende Kraft auf eine Auslenkung der mindestens einen Hinterachse und der Räder (1) ausübt und die dämpfende Kraft und/oder das Dämpfungselement mit seiner Längserstreckung in einer Ebene senkrecht zur Lenkachse (3) oder mit einem Winkel von kleiner als 30° zu der Ebene senkrecht zur Lenkachse (3) verläuft, und dass das mindestens eine Dämpfungselement mindestens einen Schwingungsdämpfer umfasst.

3. Fahrzeug nach einem der vorstehenden Ansprüche **dadurch gekennzeichnet, dass** die Sitzfläche zumindest teilweise unterhalb einer Verbindungsebene zwischen einer Rotationsachse des weiteren Rads und mindestens einen Hinterachse und/oder der Achse der mindestens zwei Räder angeordnet ist.

4. Fahrzeug nach einem der vorstehenden Ansprüche, **dadurch gekennzeichnet, dass** die Lenkachse (3) über ein Verbindungselement mit der Achse oder gemeinsamen steifen Querstruktur (4) und den mindestens zwei Rädern (1) verbunden ist.

5. Fahrzeug nach einem der vorstehenden Ansprüche, **dadurch gekennzeichnet, dass** das Fahrzeug weiter mindestens eine Vorderachse (6) umfasst, wobei die Vorderachse (6) steif mit der tragenden Struktur (2) verbunden ist und/oder bei einer Auslenkung der mindestens einen Hinterachse und der mindestens zwei Räder (1) ausschwenkt.

6. Fahrzeug nach einem der vorstehenden Ansprüche, **dadurch gekennzeichnet, dass** die tragende Struktur (2) zumindest teilweise unterhalb einer Verbindungsebene zwischen einem ersten obersten Punkt des weiteren Rads (1) und der mindestens einen Hinterachse und/oder einem zweiten obersten Punkt der mindestens zwei Rädern (1) angeordnet ist.

7. Fahrzeug nach einem der vorstehenden Ansprüche, **dadurch gekennzeichnet, dass** das mindestens eine Rückstellelement (5) zwischen der tragenden Struktur (2) und der mindestens einen Hinterachse und/oder den mindestens zwei Rädern (1) angeordnet ist.

8. Fahrzeug nach einem der vorstehenden Ansprüche **dadurch gekennzeichnet, dass** in der Ruhelage die Längserstreckung des mindestens einen Rückstellelements (5) und/oder die rückstellende Kraft senkrecht oder in einem Winkel von 90° bis 45° zu der mindestens einen Hinterachse verläuft.

9. Fahrzeug nach einem der vorstehenden Ansprüche, **dadurch gekennzeichnet, dass** das Fahrzeug mindestens zwei Rückstellelemente (5) umfasst, wobei mindestens je eins der mindestens zwei Rückstellelemente (5) zu beiden Seiten der Lenkachse (3) mit der tragenden Struktur (2) verbunden ist.

10. Fahrzeug nach einem der vorherstehenden Ansprüche, **dadurch gekennzeichnet, dass** die mindestens eine Hinterachse und die mindestens zwei Räder (1) nur über die Lenkachse (3) und das mindestens eine Rückstellelement (5) mit der tragenden Struktur (2) gekoppelt sind und die Hinterachse mit keiner weiteren Lenkvorrichtung verbunden ist.

11. Fahrzeug nach einem der vorherstehenden Ansprüche, **dadurch gekennzeichnet, dass** das Fahrzeug über mindestens ein Pedal (7) und/oder einen Elektromotor (8) angetrieben wird, wobei das mindestens eine Pedal (7) und/oder der Elektromotor (8) das mindestens eine weitere Rad (1) und/oder die mindestens zwei Räder (1) antreibt.

12. Fahrzeug nach einem der vorherstehenden Ansprüche, **dadurch gekennzeichnet, dass** die tragende Struktur (2) und/oder Sitzfläche zumindest teilweise unterhalb einer Ebene angeordnet ist, die tangential zu den obersten Punkten der mindestens zwei Räder (1) verläuft.

13. Verfahren zum Lenken eines Fahrzeugs, nämlich eines Liegerads oder Kite-Buggies, durch Gewichtsverlagerung, wobei das Fahrzeug
- mindestens zwei Räder (1) umfasst, die an mindestens einer Hinterachse, und zwar entweder einer gemeinsamen Hinterachse oder an einer oder mehrerer Hinterachsen einer gemeinsamen steifen Querstruktur (4), befestigt sind und eine tragende Struktur (2) umfasst, die über eine Lenkachse (3) mit der mindestens einen Hinterachse (4) und den mindestens zwei Rädern (1) schwenkbar verbunden ist und die durch Gewichtsverlagerung in eine Schrägstellung bringbar ist, und
- mindestens ein Rückstellelement (5) umfasst, wobei die Lenkachse (3) eine Neigung von 20° bis 80° gegen die Horizontale aufweist, wobei der Winkel der Neigung ausgehend von der Lenkachse in seitlicher Ansicht auf das Fahrzeug mit Vorwärtsfahrrichtung nach links im Uhrzeigersinn bis zur Horizontalen gemessen ist, und wobei das mindestens eine Rückstellelement (5) so angeordnet ist, dass das Rückstellelement (5) eine rückstellende Kraft auf eine schwenkende Auslenkung der mindestens einen Hinterachse und der Räder (1) um die Lenkachse ausübt und die rückstellende Kraft und/oder das Rückstellelement (5) mit seiner Längserstreckung in einer Ebene senkrecht zur Lenkachse (3) oder mit einem Winkel von kleiner als 30° zu der Ebene senkrecht zur Lenkachse (3) verläuft , wobei das Fahrzeug mindestens ein weiteres Rad (1) umfasst, wobei das weitere Rad (1) steif mit der tragenden Struktur (2) verbunden ist und bei einer Auslenkung der mindestens einen Hinterachse ausschwenkt, wobei eine Sitzfläche zumindest teilweise unterhalb einer Verbindungsebene zwischen einem ersten obersten Punkt des weiteren Rads und einem zweiten obersten Punkt der mindestens zwei Räder angeordnet ist und wobei die mindestens eine Hinterachse mit keiner weiteren Lenkvorrichtung verbunden ist, wobei der Abstand der Lenkachse zur Drehachse der zwei hinteren Räder oder zu der mindestens einen Hinterachse kleiner als der Radius jedes der zwei Räder und/oder kleiner als 30cm ist und bei dem durch die Gewichtsverlagerung das schwenkende Auslenken der mindestens einen Hinterachse und der Räder (1) um die Lenkachse bewirkt wird und wobei das mindestens eine Rückstellelement (5) mindestens eine Feder umfasst und wobei das mindestens eine Rückstellelement ohne Einwirkung anderer Kräfte das Fahrzeug in die Ruhelage bringt, wobei die Ruhelage **dadurch gekennzeichnet ist, dass** das Fahrzeug in der Ruhelage geradeaus fährt.

14. Verfahren zum Lenken eines Fahrzeugs nach Anspruch 13, **dadurch gekennzeichnet, dass** die Gewichtsverlagerung eine Gewichtsverlagerung eines auf der tragenden Struktur (2) befindlichen Lebewesens ist.

## Claims

1. A vehicle, namely recumbent bike or kite-buggy, comprising at least two wheels (1) which are attached to at least one rear axle, namely either to a common rear axle or to one or more rear axles of a common rigid transverse structure (4), a supporting structure (2) which is pivotably connected to said at least one rear axle (4) and said at least two wheels (1) via a steering axle (3) and which can be brought into an inclined position by shifting weight, and at least one return element (5), wherein the steering axle (3) has an inclination of 20° to 80° to the horizontal, wherein the angle of the inclination is measured from the steering axle in a lateral view of the vehicle with the direction of forward travel to the left in a clockwise direction to the horizontal, and wherein said at least one return element (5) is so arranged that the restoring element (5) exerts a restoring force on a deflection of said at least one rear axle and the wheels (1) and the restoring force and/or the restoring element (5) extends with its longitudinal extension in a plane perpendicular to the steering axis (3) or with an angle of less than 30° to the plane perpendicular to the steering axis (3), wherein the vehicle has at least one further wheel (1), said further wheel (1) being rigidly connected to the supporting structure (2) and pivoting out upon deflection of said at least one rear axle, wherein a seating surface is arranged at least partially below a connecting plane between a first uppermost point of the further wheel and a second uppermost point of said at least two wheels and wherein said at least one rear axle is not connected to any further steering device, wherein the distance of the steering axis to the axis of rotation of the two wheels is smaller than the radius of each of the two wheels and/or smaller than 30cm and wherein said at least one restoring element (5) comprises at least one spring and wherein said at least one restoring element (5) is set up in such a way that it brings the vehicle back to the rest position without the action of other forces, the rest position being **characterised by** the vehicle travelling straight ahead in the rest position.

2. The vehicle according to claim 1, **characterised in that** it comprises at least a damping element, said at least one damping element being damping element is arranged in such a way that the damping element exerts a damping force on a deflection of said at least one rear axle and of the wheels (1) and the damping force and/or the damping element is arranged with its longitudinal extension in a plane perpendicular to the steering axis (3) or with an angle of less than 30° to the plane perpendicular to the steering axis (3), and **in that** said at least one damping element comprises at least one vibration damper.

3. The vehicle according to one of the preceding claims **characterised in that** the seat surface is arranged at least partially below a connecting plane between an axis of rotation of the further wheel and at least one rear axle and/or the axis of said at least two wheels.

4. The vehicle according to one of the preceding claims, characterise in that the steering axle (3) is connected to the axle or common rigid transverse structure (4) and said at least two wheels (1) via a connecting element.

5. The vehicle according to one of the preceding claims, **characterised in that** the vehicle further comprises at least one front axle (6) the front axle (6) being rigidly connected to the supporting structure (2) and/or upon deflection of said at least one rear axle and said at least rear axle and said at least two wheels (1).

6. The vehicle according to one of the preceding claims, **characterised in that** the supporting structure (2) is arranged at least partially below a connecting plane between a first uppermost point of the further wheel (1) and said at least one rear axle and/or a second uppermost point of said at least two wheels (1).

7. The vehicle according to one of the preceding claims, **characterised in that** said at least one restoring element (5) is arranged between the supporting structure (2) and said at least one rear axle and/or said at least one rear axle and/or said at least two wheels (1).

8. The vehicle according to one of the preceding claims **characterised in that**, in the rest position, the longitudinal extension of said at least one element (5) and/or the restoring force extends perpendicularly or at an angle of an angle of 90° to 45° to said at least one rear axle.

9. The vehicle according to any of the preceding claims, **characterised in that** the vehicle comprises at least two restoring elements (5), wherein at least one each of said at least two restoring elements (5) is connected to the sides of the steering axle (3) is connected to the supporting structure (2).

10. The vehicle according to one of the preceding claims, **characterised in that** said at least one rear axle and said at least wheels (1) are coupled to the supporting structure (2) only via the steering axle (3) and said at least one (5), and the rear axle is not connected to any other steering device.

11. The vehicle according to one of the preceding claims, **characterised in that** the vehicle is driven via at least one pedal (7) and/or an electric motor (8), said at least one pedal (7) and/or the electric motor (8) driving said at least (7) and/or the electric motor (8) drives said at least one further wheel (1) and/or said at least two wheels (1).

12. The vehicle according to one of the preceding claims, **characterised in that** the supporting structure (2) and/or seating surface is arranged at least partially below a plane tangential to the uppermost points of said at least two wheels (1).

13. A method of steering a vehicle, namely a recumbent bike or kite-buggie, by weight transfer, wherein the vehicle
- comprises at least two wheels (1) mounted on at least one rear axle, either a common rear axle or one or more rear axles of a common or to one or more rear axles of a common rigid transverse structure (4), and comprising a supporting structure (2) connected by a steering axle (3) to said at least one rear axle (4) and said at least two wheels (1) and which can be brought into an inclined position by inclined position, and
- at least one restoring element (5), wherein the steering axle (3) has an inclination of 20° to 80° with respect to the horizontal, wherein the angle of the inclination is measured from the steering axle in a lateral view of the vehicle with the direction of forward travel to the left in a clockwise direction to the horizontal, and wherein said at least one restoring element (5) is so arranged that the restoring element (5) exerts a restoring force on a pivoting deflection of said at least one rear axle and the wheels (1) about the steering axis and the restoring force and/or the restoring element (5) extends with its longitudinal extension in a plane perpendicular to the steering axis (3) or with an angle of less than 30° to the plane perpendicular to the steering axis (3) , wherein the vehicle comprises at least one further wheel (1), said further wheel (1) being rigidly connected to the supporting structure (2) and pivoting out when said at least one rear axle is deflected, wherein a seating surface is arranged at least partially below a connecting plane between a first uppermost point of the further wheel and a second uppermost point of said at least two wheels, and wherein said at least one rear axle is not connected to any further steering device, wherein the distance of the steering axis to the axis of rotation of the two rear wheels or to said at least one rear axle is smaller than the radius of each of the two wheels and/or smaller than 30 cm and wherein the pivoting deflection of said at least one rear axle and of the wheels (1) about the steering axis is effected by the weight shift and wherein said at least one restoring element (5) comprises at least one spring and wherein said at least one restoring element brings the vehicle into the rest position without the action of other forces, wherein the rest position is **characterised in that** the vehicle drives straight ahead in the rest position.

14. The method of steering a vehicle according to claim 13, **characterised in that** the weight displacement is a weight displacement of a living being located on the supporting structure (2).

## Revendications

1. Véhicule, à savoir vélo couché ou kite-buggy, comprenant au moins deux roues (1) qui sont fixées à au moins un essieu arrière, à savoir soit à un essieu arrière commun, soit à un ou plusieurs essieux arrière d'une structure transversale rigide commune (4), une structure de support (2) qui est reliée de manière pivotante audit au moins un essieu arrière (4) et auxdites au moins deux roues (1) par l'intermédiaire d'un essieu directeur (3) et qui peut être amenée dans une position inclinée par un déplacement de poids, et au moins un élément de retour (5), dans lequel l'essieu directeur (3) a une inclinaison de 20° à 80° par rapport à l'horizontale, dans lequel l'angle d'inclinaison est mesuré à partir de l'axe de direction dans une vue latérale du véhicule avec le sens de la marche avant vers la gauche dans le sens des aiguilles d'une montre par rapport à l'horizontale, et dans lequel ledit au moins un élément de rappel (5) est disposé de telle sorte que l'élément de rappel (5) exerce une force de rappel sur une déviation dudit au moins un essieu arrière et des roues (1) et la force de rappel et/ou l'élément de rappel (5) s'étend avec son extension longitudinale dans un plan perpendiculaire à l'axe de direction (3) ou avec un angle de moins de 30° par rapport au plan perpendiculaire à l'axe de direction (3), dans lequel le véhicule a au moins une autre roue (1), ladite autre roue (1) étant reliée de manière rigide à la structure de support (2) et pivotant vers l'extérieur lors de la flexion dudit au moins un essieu arrière, dans lequel une surface d'assise est disposée au moins partiellement en dessous d'un plan de connexion entre un premier point le plus haut de l'autre roue et un second point le plus haut desdites au moins deux roues et dans lequel ledit au moins un essieu arrière n'est pas relié à un autre dispositif de direction, dans lequel la distance de l'axe de direction à l'axe de rotation des deux roues est inférieure au rayon de chacune des deux roues et/ou inférieure à 30 cm et dans lequel ledit au moins un élément de restauration (5) comprend au moins un ressort et dans lequel ledit au moins un élément de restauration (5) est configuré de telle sorte qu'il ramène le véhicule à la position de repos sans l'action d'autres forces, la position de repos étant **caractérisée par** le déplacement du véhicule en ligne droite en position de repos.

2. Véhicule selon la revendication 1, **caractérisé en ce qu'**il comprend au moins un élément d'amortissement, ledit au moins un élément d'amortissement étant disposé de telle sorte que l'élément d'amortissement exerce une force d'amortissement sur une déviation dudit au moins un essieu arrière et des roues (1) et la force d'amortissement et/ou l'élément d'amortissement est disposé avec son extension longitudinale dans un plan perpendiculaire à l'axe de direction (3) ou avec un angle de moins de 30° par rapport au plan perpendiculaire à l'axe de direction (3), et **en ce que** ledit au moins un élément d'amortissement comprend au moins un amortisseur de vibrations.

3. Véhicule selon l'une des revendications précédentes **caractérisé en ce que** la surface d'assise est disposée au moins partiellement en dessous d'un plan de liaison entre un axe de rotation de la roue supplémentaire et d'au moins un essieu arrière et/ou l'axe desdites au moins deux roues.

4. Véhicule selon l'une des revendications précédentes, **caractérisé en ce que** l'essieu directeur (3) est relié à l'essieu ou à la structure transversale rigide commune (4) et auxdites au moins deux roues (1) par un élément de liaison.

5. Véhicule selon l'une des revendications précédentes, **caractérisé en ce que** le véhicule comprend en outre au moins un essieu avant (6), l'essieu avant (6) étant relié rigidement à la structure de support (2) et/ou lors de la déflexion dudit au moins un essieu arrière et dudit au moins un essieu arrière et desdites au moins deux roues (1).

6. Véhicule selon l'une des revendications précédentes, **caractérisé en ce que** la structure de support (2) est disposée au moins partiellement en dessous d'un plan de liaison entre un premier point le plus haut de la roue supplémentaire (1) et ledit au moins un essieu arrière et/ou un deuxième point le plus haut desdites au moins deux roues (1).

7. Véhicule selon l'une des revendications précédentes, **caractérisé en ce que** ledit au moins un élément de rappel (5) est disposé entre la structure porteuse (2) et ledit au moins un essieu arrière et/ou ledit au moins un essieu arrière et/ou lesdites au moins deux roues (1).

8. Véhicule selon l'une des revendications précédentes **caractérisé en ce que**, en position de repos, l'extension longitudinale dudit au moins un élément (5) et/ou la force de rappel s'étend perpendiculairement ou selon un angle d'un angle de 90° à 45° audit au moins un essieu arrière.

9. Véhicule selon l'une quelconque des revendications précédentes, **caractérisé en ce que** le véhicule comprend au moins deux éléments de restauration (5), dans lequel au moins un chacun desdits au moins deux éléments de restauration (5) est relié aux côtés de l'axe de direction (3) est relié à la structure de support (2).

10. Véhicule selon l'une des revendications précédentes, **caractérisé en ce que** ledit au moins un essieu arrière et lesdites au moins roues (1) sont couplés à la structure de support (2) uniquement par l'intermédiaire de l'essieu directeur (3) et dudit au moins un (5), et l'essieu arrière n'est relié à aucun autre dispositif de direction.

11. Véhicule selon l'une des revendications précédentes, **caractérisé en ce que** le véhicule est entraîné par au moins une pédale (7) et/ou un moteur électrique (8), ladite au moins une pédale (7) et/ou le moteur électrique (8) entraînant ladite au moins une autre roue (1) et/ou lesdites au moins deux roues (1).

12. Véhicule selon l'une des revendications précédentes, **caractérisé en ce que** la structure de support (2) et/ou la surface d'assise est disposée au moins partiellement sous un plan tangentiel aux points les plus hauts desdites au moins deux roues (1).

13. Procédé pour diriger un véhicule, à savoir un vélo couché ou un kite-buggie, par transfert de poids, dans lequel le véhicule
- comprend au moins deux roues (1) montées sur au moins un essieu arrière, soit un essieu arrière commun, soit un ou plusieurs essieux arrière d'une structure transversale rigide commune ou à un ou plusieurs essieux arrière d'une structure transversale rigide commune (4), et comprenant une structure de support (2) reliée par un essieu directeur (3) audit au moins un essieu arrière (4) et auxdites au moins deux roues (1) et qui peut être amenée dans une position inclinée par inclinaison, et
- au moins un élément de restauration (5), dans lequel l'axe de direction (3) a une inclinaison de 20° à 80° par rapport à l'horizontale, dans lequel l'angle de l'inclinaison est mesuré à partir de l'axe de direction dans une vue latérale du véhicule avec la direction de déplacement vers l'avant vers la gauche dans le sens des aiguilles d'une montre par rapport à l'horizontale, et dans lequel ledit au moins un élément de restauration (5) est disposé de telle sorte que l'élément de restauration (5) exerce une force de restauration sur une déviation pivotante dudit au moins un essieu arrière et des roues (1) autour de l'axe de direction et la force de restauration et/ou l'élément de restauration (5) s'étend avec son extension longitudinale dans un plan perpendiculaire à l'axe de direction (3) ou avec un angle de moins de 30° par rapport au plan perpendiculaire à l'axe de direction (3), dans lequel le véhicule comprend au moins une autre roue (1), ladite autre roue (1) étant reliée de manière rigide à la structure de support (2) et pivotant vers l'extérieur lorsque ledit au moins un essieu arrière est dévié, dans lequel une surface d'assise est disposée au moins partiellement en dessous d'un plan de connexion entre un premier point le plus haut de la roue supplémentaire et un second point le plus haut desdites au moins deux roues, et dans lequel ledit au moins un essieu arrière n'est pas connecté à un autre dispositif de direction, dans lequel la distance de l'axe de direction à l'axe de rotation des deux roues arrière ou audit au moins un essieu arrière est inférieure au rayon de chacune des deux roues et/ou inférieure à 30 cm et dans lequel la déviation de pivotement dudit au moins un essieu arrière et des roues (1) autour de l'axe de direction est effectuée par le déplacement du poids et dans lequel ledit au moins un élément de restauration (5) comprend au moins un ressort et dans lequel ledit au moins un élément de restauration amène le véhicule dans la position de repos sans l'action d'autres forces, dans laquelle la position de repos est **caractérisée par le fait que** le véhicule roule en ligne droite dans la position de repos.

14. Procédé de pilotage d'un véhicule selon la revendication 13, **caractérisé en ce que** le déplacement de poids est un déplacement de poids d'un être vivant situé sur la structure de support (2).
